# EUROPÄISCHE PATENTSCHRIFT

(11) **EP 1 064 226 B1**
(45) Veröffentlichungstag und Bekanntmachung des Hinweises auf die Patenterteilung: **26.06.2002**
(21) Anmeldenummer: 99915633.4
(22) Anmeldetag: 17.03.1999
(51) Int. Cl.: C01G 49/06, C01G 49/08

(54) **VERFAHREN ZUR HERSTELLUNG VON EISENOXID-PIGMENTEN AUS DÜNNSÄURE AUS DER TiO2-HERSTELLUNG**
METHOD FOR PRODUCING IRON OXIDE PIGMENTS FROM WASTE ACID RESULTING FROM TiO2 PRODUCTION
PROCEDE PERMETTANT DE FABRIQUER DES PIGMENTS A BASE D'OXYDE DE FER A PARTIR D'ACIDE DILUE PROVENANT DE LA FABRICATION DU TiO2

(30) Priorität: 20.03.1998 DE 19812260
(43) Veröffentlichungstag der Anmeldung: 03.01.2001
(73) Patentinhaber: Bayer Aktiengesellschaft, 51368 Leverkusen (DE)
(72) Erfinder: AUER, Gerhard, D-47800 Krefeld (DE); LAILACH, Günter, D-47799 Krefeld (DE); MEISEN, Ulrich, D-47829 Krefeld (DE); SCHUY, Werner, D-47918 Tönisvorst (DE); JULIUS, Udo, D-47506 Neukirchen-Vluyn (DE)
(86) Internationale Anmeldenummer: EP9901736
(87) Internationale Veröffentlichungsnummer: WO9948815

(56) Entgegenhaltungen:
- EP-A- 0 638 515
- US-A- 5 421 878
- CHEMICAL ABSTRACTS, vol. 92, no. 4, 28. Januar 1980 (1980-01-28) Columbus, Ohio, US; abstract no. 24399, PRASAD: XP002109404 & IN 143 745 A (COUNCIL OF SCIENTIFIC AND INDUSTRIAL RESEARCH) 28. Januar 1978 (1978-01-28)
- DATABASE WPI Section Ch, Week 8018 Derwent Publications Ltd., London, GB; Class E31, AN 80-32443C XP002109405 & SU 684 049 A (SANNIKOV), 8. September 1979 (1979-09-08)

## Beschreibung

Die Erfindung betrifft ein Verfahren zur Herstellung von Eisenoxid-Pigmenten aus Dünnsäure, die bei der Herstellung von Titandioxid nach dem Sulfatverfahren anfällt.

Die Herstellung von Eisenoxid-Pigmenten aus Rückständen aus der Titandioxid-Produktion ist beispielsweise aus DE-A 24 60 493 und JP-A 44 050 695 schon seit längerem bekannt. Insbesondere das im Rahmen der Titandioxid-Produktion anfallende Eisensulfat-Heptahydrat (Grünsalz) wird als Rohstoff für die Herstellung von Eisenoxid-Pigmenten genutzt. Der typische Verlauf dieses Verfahrens ist beispielsweise in Ullmann's Encyclopedia of Industrial Chemistry, 5th ed., Vol. A 20, p. 297 ff beschrieben.

Dünnsäure, die bei der Herstellung von Titandioxid nach dem Sulfatverfahren ebenfalls anfällt, ist dagegen weniger geeignet zur Herstellung von Eisenoxid-Pigmenten. Zwar lassen sich analog zu üblicherweise für die Herstellung von Eisenoxid-Pigmenten verwendeten Verfahren aus Dünnsäure ebenfalls Eisenoxide gewinnen, jedoch entspricht die Qualität dieser Eisenoxide bei weitem nicht den Anforderungen an hochwertige Eisenoxid-Pigmente, insbesondere Eisenoxidrot-Pigmente oder Eisenoxidgelb-Pigmente. Dies liegt an unerwünschten Bestandteilen der Dünnsäure, wie Verbindungen des Ti, Cr, V oder Mn, die die Teilchenform, Teilchengröße, Stabilität und Farbeigenschaften der daraus erhaltenen Eisenoxid-Pigmente nachteilig beeinflussen. Zudem beeinträchtigt der hohe Anteil freier Schwefelsäure in der Dünnsäure, der zur Herstellung von Eisenoxidpigmenten zuerst neutralisiert werden muß, die Wirtschaftlichkeit des Verfahrens.

Die Verwertung oder zumindest schadlose Beseitigung der Dünnsäure ist in Europa und an den meisten anderen Produktionsstandorten für Titandioxid vorgeschrieben, so daß im Laufe der Zeit unterschiedliche Verfahren zur Verwertung entwickelt wurden:
In der Druckschrift EP-A 577 272 wird beschrieben, daß aus der Dünnsäure durch teilweise Neutralisation mit Calciumcarbonat ein verwertbarer Gips erhalten werden kann. Die nach Abtrennung dieses auch als "weißer Gips" bezeichneten Materials verbleibende Metallsulfat-Lösung wird danach durch Zugabe von CaO oder CaCO₃ auf einen pH-Wert von ca. 9 gebracht, wobei das hierbei erhaltene auch als "roter Gips" bezeichnete Material deponiert werden muß. Dabei werden einerseits wertvolle Rohstoffe einem Recycling entzogen und andererseits wertvoller Deponieraum in großem Umfang verbraucht, da je nach Titanrohstoff 1 bis 2,5 t dieses Abfalls pro Tonne erzeugten TiO₂-Pigments anfallen.

Ein anderes in EP-A 0 133 505 beschriebenes Verfahren zur Aufarbeitung der Dünnsäure vermeidet diese Nachteile, indem praktisch die gesamte anfallende Dünnsäure wieder zur Herstellung von TiO₂ verwendet wird, wobei die Dünnsäure zunächst aufkonzentriert und nach Abtrennung der dabei ausfallenden Filtersalze die 65 bis 85 %ige Schwefelsäure wieder zum Erzaufschluß eingesetzt wird. Aus den Filtersalzen wird durch thermische Spaltung SO₂ und aus diesem reine Schwefelsäure oder Oleum gewonnen, welche ebenfalls wieder zum Erzaufschluß verwendet werden. Dieses Verfahren minimiert zwar den Rohstoffverbrauch, ist jedoch sehr energieund damit kostenaufwendig.

Ein weiteres Verfahren zur Aufarbeitung der Dünnsäure, das in der Druckschrift US-A 3 016 286 beschrieben ist, beinhaltet die Neutralisation der Dünnsäure und die Ausfällung und Abtrennung der Hydroxide von Ti, Al, Cr, und V sowie die anschließende Ausfällung von Magnetit mit Ammoniak. Die Nachteile dieses Verfahrens bestehen jedoch darin, daß zum einen große Mengen an Ammoniak zur Neutralisation der freien Schwefelsäure verbraucht werden und daß der aus der stark Ammoniumsulfat-haltigen Lösung gefällte Magnetit keine Pigmenteigenschaften aufweist.

Bei einer in der Druckschrift EP-A 638 515 beschriebenen Modifizierung des Verfahrens in Form einer Extraktion des Magnesiums aus der Ammoniumsulfat-haltigen Lösung kann anschließend durch Kristallisation reines Ammoniumsulfat gewonnen und als Düngemittel verwendet werden. Dadurch wird zwar der Anteil an verwertetem Material erhöht, die Wirtschaftlichkeit des Verfahrens ist aufgrund der zusätzlichen Verfahrenschritte und der minderen Qualität des aus der stark Ammoniumsulfat-haltigen Lösung erhaltenen Magnetits jedoch nicht befriedigend.

Eine andere Variante zur Aufarbeitung der Dünnsäure besteht gemäß US-A 4 137 292 und DE-A 24 56 320 darin, daß durch Neutralisation der Dünnsäure mit Calciumverbindungen gleichzeitig Gips und Magnetit ausgefällt werden, wobei für eine Verwertung der beiden Verbindungen eine mechanische Abtrennung beispielsweise mittels eines Hydrozyklons oder durch Magnetabscheidung, vorgenommen werden muß, die trotz aufwendiger Verfahrensschritte weder zu reinem Gips noch zu einem reinen Magnetitpigment führt. Eine Optimierung des Verfahrens laut GB-A 1 421 773 dahingehend, daß bei der Fällung des Gipses mit Calciumverbindungen gleichzeitig Ammonium- oder Alkalimetallsalze anwesend sind, vermeidet ebenfalls nicht die erwähnten prinzipiellen Nachteile dieses Verfahrens.

Die Anwesenheit höherer Mangan-Gehalte in den Eisensalz-Lösungen ist für die Herstellung von Eisenoxidgelb- oder Eisenoxidrot-Pigmenten störend. Enthalten die zur Herstellung von Eisenoxidrot verwendeten Ausgangsmaterialien α-FeOOH oder Magnetit mehr als 0,11 Gew.-% Mangan, bezogen auf Eisen, so läßt sich kein hochwertiges Rotpigment herstellen. Ebenfalls störend wirkt die Anwesenheit von Cr, V, Ti und anderer farbgebender oder den Fällprozeß beeinflussender Metallionen.

Aufgabe war es daher, ein Verfahren zu entwickeln, das es ermöglicht, die anfallende Dünnsäure unter Herstellung qualitativ hochwertiger Eisenoxid-Pigmente zu verarbeiten.

Überraschenderweise wurde gefunden, daß sich aus der bei der Herstellung von Titandioxid nach dem Sulfatverfahren anfallenden Dünnsäure hochwertige Eisenoxid-Pigmente dadurch herstellen lassen, daß eine teilweise Neutralisation der in der Dünnsäure enthaltenen freien Schwefelsäure mit metallischem Eisen und/oder Eisenverbindungen erfolgt, die unerwünschten Elemente Ti, Al, Cr und V zumindest teilweise als Hydroxide ausgefällt und abgetrennt werden und die nach deren Abtrennung erhaltene Eisensulfat-haltige Lösung zu Eisenoxid-Pigmenten weiterverarbeitet wird.

Gegenstand der Erfindung ist ein Verfahren zur Herstellung von Eisenoxid-Pigmenten aus der bei der Herstellung von Titandioxid nach dem Sulfatverfahren anfallenden Dünnsäure, dadurch gekennzeichnet, daß in einer ersten Stufe eine teilweise Neutralisation der in der Dünnsäure enthaltenen Schwefelsäure mit Verbindungen aus der Gruppe metallisches Eisen und/oder Eisenverbindungen erfolgt, gegebenenfalls mit einer weiteren alkalischen Verbindung weiter neutralisiert wird, aus dem so erhaltenen Reaktionsprodukt der Ti-, Al-, Cr- und V-Verbindungen enthaltende Niederschlag abgetrennt wird und aus der so erhaltenen Eisensulfat-haltigen Lösung unter Zusatz alkalischer Verbindungen sowie eines Oxidationsmittels ein Eisenoxid-Pigment ausgefällt wird.

Die unerwünschten Elemente Ti, Al, Cr und V werden entweder während der Zugabe des metallischen Eisens oder der Eisenverbindungen ausgefällt, falls dieser Schritt bis zu einem hinreichend hohen pH-Wert durchgeführt wird; die für die Ausfällung der unerwünschten Elemente notwendige pH-Wert-Erhöhung kann aber auch nach Beendigung der Reaktion mit Eisen bzw. Eisenverbindungen durch Zugabe von anderen alkalischen Verbindungen erreicht werden.

Die nach Abtrennung der unerwünschten Elemente erhaltene Eisensulfat-haltige Lösung kann entweder zu einem Magnetit-Pigment umgesetzt werden, das anschließend in bekannter Weise zu einem Eisenoxidrot-Pigment bzw. Eisenoxidgelb-Pigment verglüht werden kann; alternativ kann aus der Eisensulfat-haltigen Lösung aber auch nach dem Fällverfahren ein Eisenoxidgelb-Pigment (α-FeOOH) hergestellt werden, das anschließend in bekannter Weise zu einem Eisenoxidrot-Pigment verglüht werden kann.

Bevorzugt werden zur Neutralisation der Dünnsäure in der ersten Stufe metallisches Eisen oder basische Eisenverbindungen mit einem Mangan-Gehalt von <0,8 Gew.-% Mn, bezogen auf Fe, verwendet Besonders bevorzugt ist ein Mangan-Gehalt von <0,4 Gew.-% Mn, bezogen auf Fe. Auf diese Weise können selbst aus einer Dünnsäure, die einen Mangan-Gehalt von 1 bis 5 Gew.-% Mn, bezogen auf Fe, insbesondere 1,5 bis 2,5 Gew.-% aufweist, besonders farbstarke und hochwertige Eisenoxidrot-Pigmente erhalten werden.

Die teilweise Neutralisation der Schwefelsäure in der ersten Stufe erfolgt vorzugsweise durch Zugabe von metallischem Eisen, Eisenoxiden oder Eisenhydroxiden. Die teilweise Neutralisation der Dünnsäure in der ersten Stufe kann auch durch eine Mischung verschiedener Eisen-haltiger Substanzen erfolgen, beispielsweise einer Mischung aus metallischem Eisen und Eisenoxiden und/oder Eisenhydroxiden. Das erfindungsgemäße Verfahren zeichnet sich dadurch aus, daß aufgrund der Abtrennung der Fremdmetallhydroxide sogar üblicherweise ungeeignete Eisen-Abfallstoffe, die Cr, V, Ni, Co oder andere unerwünschte Verunreinigungen enthalten, als Rohstoff verwendet werden können. Besonders wirtschaftlich ist dabei die Verwendung von Eisen-haltigen Reststoffen, die andernfalls aufwendig entsorgt werden müßten, beispielsweise Eisenschrott, Eisen-haltige Produktionsrückstände, beispielsweise Eisenoxid-haltige Rückstände aus dem Laux-Verfahren, oder Walzzunder, Drehspäne oder Gußeisenspäne.

Bei der Verwendung von Eisen(III)verbindungen ist durch gleichzeitige Zugabe von metallischem Eisen zu gewährleisten, daß der Fe(III)-Gehalt in der Lösung möglichst gering bleibt.

Besonders günstig kann die Verwendung mehrerer verschiedener Eisenquellen mit unterschiedlicher Reaktivität nacheinander sein. So erfolgt die Neutralisation der Dünnsäure vorzugsweise zuerst mit einem weniger reaktiven Material wie Walzzunder und anschließend die weitere Neutralisation der nunmehr teilneutralisierten Dünnsäure mit reaktiveren Materialien wie Gußeisenspänen.

Auch inerte oder unlösliche Bestandteile in den Eisen-Materialien stören nicht, da diese bei der nachfolgenden Stufe zusammen mit den dort ausgefällten Verbindungen abgetrennt und entsorgt werden können.

Es ist vorteilhaft, die Dünnsäure vor der Umsetzung mit den Eisenverbindungen zu verdünnen, um die Viskosität der Reaktionsmischung zu verringern und das entstehende Eisensulfat in Lösung zu halten. Zur Verdünnung kann entweder frisches Wasser oder aber ein Prozeßwasser, das im weiteren Verlauf des Verfahrens anfällt, verwendet werden.

Die teilweise Neutralisation der Schwefelsäure in der ersten Stufe mit Eisen oder Eisen-haltigen Verbindungen wird auf einen pH-Wert von 0,5 bis 4,7, bevorzugt auf einen pH-Wert von 2,5 bis 4,7 vorgenommen. Gegebenenfalls wird die Lösung danach durch Zugabe weiterer alkalischer Verbindungen weiter auf einen pH-Wert von 3,0 bis 5,0, bevorzugt auf einen pH-Wert von 4,0 bis 4,8 neutralisiert.

Der auf diese Weise erhaltene Niederschlag der Hydroxide von Ti, Al, Cr, V und Fe(III) wird von der Flüssigphase abgetrennt und kann entweder deponiert oder als Rohstoff für die Gewinnung von Ti, Al, Cr oder V verwendet werden. Gegebenenfalls aus den verwendeten Rohstoffen stammende ungelöste Bestandteile werden an dieser Stelle zusammen mit den Hydroxiden abgetrennt. Vorzugsweise wird vor der Ausfällung des Ti-, Al-, Cr- und V-haltigen Niederschlags gegebenenfalls vorhandenes Fe(III) durch Zugabe eines Reduktionsmittels, insbesondere metallischem Eisen zu Fe(II) reduziert. Dadurch wird die Menge des zu entsorgenden oder weiter zu verwertenden Niederschlags der zweiten Fällungsstufe reduziert und die Ausbeute an hochwertigem Eisenoxid-Pigment in der nachfolgenden Stufe erhöht. Bei der Reduktion des Fe(III) ist die Reaktion jedoch so zu steuern, daß möglichst wenig Ti³⁺ entsteht, das anschließend nicht so gut wie Ti⁴⁺ ausgefällt würde. Gegebenenfalls kann auch durch Zugabe von Keimen aus Titanoxidhydrat die Fällung des Titans verbessert werden.

Falls für die Neutralisation der Dünnsäure neben metallischem Eisen oder Eisenverbindungen auch weitere alkalische Verbindungen eingesetzt werden, empfiehlt sich die Verwendung von solchen Verbindungen, die gut filtrierbare, schwerlösliche Sulfate bilden, beispielsweise CaO oder Ca(OH)₂, damit die Filtrierbarkeit des gesamten anfallenden Feststoffs deutlich verbessert wird. Besonders vorteilhaft ist die Verwendung von Kraftwerksasche, Müllverbrennungsasche oder einer anderen alkalisch reagierenden Asche als Neutralisationsmittel.

Die nach Abtrennung der Ti-, Al-, Cr- und V-haltigen Feststoffe erhaltene Eisensulfat-haltige Lösung weist vorzugsweise einen Mangan-Gehalt von <0,9 Gew.-%, besonders bevorzugt von <0,5 Gew.-%, bezogen auf Fe, auf.

Aus der nach Abtrennung der Feststoffe erhaltenen Eisensulfat-haltigen Lösung lassen sich in bekannter Weise nach dem Fällverfahren Eisenoxidgelb-Pigmente (α-FeOOH, Goethit) und Eisenoxidschwarz-Pigmente (Fe₃O₄, Magnetit) herstellen (Ullmann's Encyclopedia of Industrial Chemistry, 5th ed., Vol. A 20, p. 297 ff). Die Herstellung von Eisenoxidrot nach dem Fällverfahren ist zwar möglich, aber wesentlich schwieriger.

Für die Fällung des Eisenoxids wird die Eisensulfat-haltige Lösung bevorzugt auf eine Konzentration von 150 bis 250 g, besonders bevorzugt auf 180 bis 190 g FeSO₄ pro Liter eingestellt. Gegebenenfalls kann diese Konzentration durch Eindampfen oder Verdünnen eingestellt werden. Diese eingestellte Eisensulfat-haltige Lösung wird unter Zusatz alkalischer Verbindungen und eines Oxidationsmittels in bekannter Weise zu einem Magnetit-Pigment oder Eisenoxidgelb-Pigment umgesetzt.

Für die Fällung von Eisenoxidgelb (α-FeOOH) wird zu einem in bekannter Weise hergestellten α-FeOOH-Keim (Ullmann's Encyclopedia of Industrial Chemistry, 5th ed., Vol. A20, p. 297ff.) vorzugsweise die 4 bis 30 fache Menge, berechnet als Fe) an FeSO₄ in Form einer wäßrigen Lösung zugegeben und unter Rühren auf eine Temperatur zwischen 60 und 85°C gebracht. Anschließend wird mit einem Oxidationsmittel oxidiert, während der pH-Wert der Lösung mit einer Rate von 0,01 bis 0,4 pH-Einheiten/h auf einen End-pH-Wert von 3,0 bis 5,0 gebracht wird. Dazu werden als Fällungsmittel alkalisch reagierende Verbindungen zugesetzt, die keine schwerlöslichen Sulfate bilden, beispielsweise gasförmiges oder in Wasser gelöstes NH₃, NaOH, KOH, MgO oder Mg(OH)₂. Als Oxidationsmittel können beispielsweise Verbindungen aus der Gruppe Sauerstoff, Ozon, H₂O₂, Natriumhypochlorit, Chlorlauge, Chlorate, Perchlorate, Nitrate und Chlor verwendet werden. Bevorzugt wird Sauerstoff oder ein sauerstoffhaltiges Gasgemisch, insbesondere Luft in die Reaktionsmischung eingeleitet. Die Oxidation wird vorzugsweise beendet, sobald der Fe-II-Gehalt der Suspension kleiner als 1 mol-% ist.

Bei der Pigmentbildung können Modifikatoren zugesetzt werden, die die Teilchenform und die Teilchengrößenverteilung steuern. Hier sind besonders Aluminium- und Zinkverbindungen sowie Phosphate wirksam. Es können jedoch auch organische Modifikatoren wie aliphatische Amine, Hydroxycarbonsäuren, aliphatische Alkohole oder Carbonsäuren oder deren Derivate eingesetzt werden.

Die Aufarbeitung der Pigment-Suspensionen erfolgt mittels der bekannten Schritte Filtration, Trocknung und Mahlung. Der Fachmann ist durch geeignete Variation der Herstellungsbedingungen in der Lage, eine breite Palette von Eisenoxidgelb-Pigmenten verschiedener Teilchengröße und somit verschiedener Farbtöne herzustellen.

Für die erfindungsgemäße Herstellung eines Eisenoxidschwarz-Pigments (Magnetit) wird zu der Eisensulfat-haltigen Lösung vorzugsweise eine solche Menge eines Fällungsmittels gegeben, daß das Verhältnis Eisen(II) zu Fällungsmittel 0,4 bis 0.65, besonders bevorzugt 0,5 bis 0,58 Äquivalente beträgt. Dazu wird der Eisensulfat-haltigen Lösung vorzugsweise die berechnete Menge des Fällungsmittels bei einer Temperatur zwischen 60 und 95°C, insbesondere zwischen 75 und 95°C, zugepumpt. Als Fällungsmittel werden alkalisch reagierende Verbindungen verwendet, die keine schwerlöslichen Sulfate bilden, beispielsweise gasförmiges oder in Wasser gelöstes NH₃, NaOH, KOH, MgO oder Mg(OH)₂. Anschließend werden als Oxidationsmittel beispielsweise Verbindungen aus der Gruppe Sauerstoff, Ozon, H₂O₂, Natriumhypochlorit, Chlorlauge, Chlorate, Perchlorate, Nitrate und Chlor zugesetzt. Bevorzugt wird Sauerstoff oder ein sauerstoffhaltiges Gasgemisch, insbesondere Luft in die Reaktionmischung eingeleitet. Dabei wird der pH-Wert der Lösung vorzugsweise weitgehend konstant gehalten wird. Die Oxidation wird vorzugsweise beendet, sobald der Fe(II)-Gehalt der Suspension kleiner als 1 mol-% ist.

Die Aufarbeitung der Pigment-Suspensionen erfolgt mittels der bekannten Schritte Filtration, Trocknung und Mahlung. Der Fachmann ist durch geeignete Variation der Herstellungsbedingungen in der Lage sein, eine breite Palette von Eisenoxidschwarz-Pigmenten verschiedener Teilchengröße und somit verschiedener Farbtöne und Stabilität herzustellen.

Mittels der beschriebenen Verfahren ist es möglich aus Dünnsäure α-FeOOH oder Fe₃O₄ mit einem Mangan-Gehalt von ≤0,11 Gew.-% Mn, bevorzugt ≤0,06 Gew.-% Mn, bezogen auf Eisen, herzustellen. Aufgrund des niedrigen Mangan-Gehalts eignen sich diese in besonderer Weise zu einer Verglühung zu Eisenoxidrot-Pigmenten:

Zur Herstellung von Eisenoxidrot-Pigmenten (Fe₂O₃) wird ein erfindungsgemäß hergestelltes α-FeOOH oder Fe₃O₄ bei Temperaturen zwischen 350 und 1000°C, besonders bevorzugt zwischen 600 und 900°C in Gegenwart eines Sauerstoff-haltigen Gases calciniert. Die Durchführung des erfindungsgemäßen Verfahrens ist nicht an die Verwendung eines bestimmten Ofentyps gebunden. Die Calcination kann beispielsweise in einem Wirbelschichtofen, einem Kammerofen oder einem Drehrohrofen erfolgen. Die entsprechenden erforderlichen Verweilzeiten sind dem eingesetzten Ofen anzupassen. Im Anschluß an die Calcination ist in der Regel, besonders aber bei Anwendung von Calcinier-Temperaturen oberhalb von 600°C, eine Mahlung erforderlich. Vorzugsweise wird eine Trockenmahlung unter Zusatz eines üblichen Mahlhilfsmittels, beispielsweise Amine, Alkohle, Polyacrylate, durchgeführt. Da das erfindungsgemäß hergestellte Eisenoxidrot aufgrund seiner engen Teilchengrößenverteilung und seines geringen Agglomerationsgrads keiner besonders intensiven Mahlung bedarf, kann ein breites Spektrum von Mühlen eingesetzt werden. Strahlmühlen, Prallmühlen, Pendelmühlen und Walzenmühlen sind zur Mahlung der erfindungsgemäß erhaltenen Rotpigmente geeignet.

Eine bevorzugte Form des erfindungsgemäßen Verfahrens besteht darin, daß zur Ausfällung der Ti-, Al-, Cr- und V-Hydroxide Ammoniak und zur Fällung des Eisenoxid-Pigments ebenfalls Ammoniak in gasförmiger oder in Wasser gelöster Form verwendet wird. Anschließend kann dann der Ammoniak aus der nach Abtrennung des Eisenoxid-Pigments erhaltenen (NH₄)₂SO₄-haltigen Lösung durch Zusatz von CaO wieder ganz oder teilweise zurückgewonnen wird. Nach Zugabe von CaO oder Ca(OH)₂ bis zu einem pH-Wert von ca. 10 entweicht Ammoniak in Gasform und kann ohne Komprimierung oder sonstige Behandlung direkt wieder bei der Eisenoxid-Fällung eingesetzt werden. Besonders bevorzugt wird aus der Suspension, aus der nach der Zugabe des CaO oder Ca(OH)₂ der gasförmige Ammoniak gewonnen wurde, der restliche Ammonium-Gehalt durch Strippen mit Dampf oder Luft in einer Strippkolonne entfernt. Die auf diese Weise erhaltene wäßrige Ammoniak-Lösung kann ohne weitere Behandlung wieder bei der Eisenoxid-Fällung eingesetzt werden.

Der nach der Ammoniak-Rückgewinnung verbleibende Gips-haltige Niederschlag kann abfiltriert und nach Neutralisation, beispielsweise nach einer Wäsche mit verdünnter Schwefelsäure, als Baustoff verwertet werden. Das alkalische Filtrat enthält im wesentlichen Magnesiumsulfat und kann als Düngemittel verwendet oder nach Neutralisation als Neutralsalz-haltiges Abwasser entsorgt werden.

Alternativ kann die Freisetzung des Ammoniaks durch Bariumoxid, -hydroxid oder -carbonat unter Bildung von Bariumsulfat erfolgen.

Die erfindungsgemäß erhaltenen Eisenoxid-Pigmente weisen besonders gute pigmentoptische Eigenschaften auf, da die hierfür verwendete Eisensulfat-haltige Ausgangslösung aufgrund der Vorfällung der Metallhydroxide besonders wenig Titan und Schwermetalle, insbesondere wenig Cr und V enthält. Nach dem erfindungsgemäßen Verfahren ist es möglich, die als Abfall anfallende Dünnsäure mit einfachen verfahrenstechnischen Operationen und mit vergleichsweise niedrigem Energiebedarf zu hochwertigen Pigmenten zu verarbeiten und den Abfallanfall zu minimieren, vorzugsweise auf ca. 0,2 bis 0,7 t zu deponierender Abfall pro t erzeugtes TiO₂. Darüber hinaus erlaubt das erfindungsgemäße Verfahren sogar die sinnvolle Verwendung industrieller Reststoffe zur Herstellung qualitativ hochwertiger Eisenoxid-Pigmente, wodurch die Wirtschaftlichkeit des Verfahrens erheblich verbessert wird. Von besonderer wirtschaftlicher Bedeutung ist dabei die Möglichkeit zur Verwendung von relativ reaktionsträgen oder verunreinigten Eisen-haltigen Materialien, die bei anderen Herstellverfahren von Eisenoxid-Pigmenten nicht oder nur unter erhöhtem Aufwand einsetzbar sind.

Die erfindungsgemäß erhaltenen Eisenoxid-Pigmente können zur Einfärbung von Farben, Lacken, Kunststoffen, Baustoffen, Papier oder anderen Materialien verwendet werden. Der erfindungsgemäß erhaltene Magnetit kann darüber hinaus auch als Magnet-Pigment für Toner Verwendung finden.

Die Bestimmung des Farbtons des erhaltenen Eisenoxid-Pigments erfolgt nach folgenden Vorschriften:

### Messung des Purtons von Eisenoxid-Pigmenten:

Das Pigment wird mit einem Muller (Teller-Farbenausreibmaschine) in einem lufttrocknenden Lacksystem dispergiert. Das Lacksystem (Lack) besteht aus folgenden Komponenten:

| | |
|---|---|
| 95,26 % | ®ALKYDAL F 48 (Bindemittel, Bayer AG, mittelöliges, lufttrocknendes Alkydharz auf Basis trocknender pflanzlicher Fettsäuren in Testbenzin/Xylol-Gemisch 38:7 mit einem nichtflüchtigen Anteil von ca. 55 %, Ölgehalt/Triglycerid im nichtflüchtigen Anteil ca. 48 %, Phthalsäureanhydrid im nichtflüchtigen Anteil ca. 26 %) |
| 0,78 % | 2-Butanonoxim, 55 %ig in Testbenzin (Hautverhinderungsmittel) |
| 1,30 % | ®Octa Soligen Calcium (Netzmittel, Calciumsalz verzweigter C₆-C₁₉-Fettsäuren im Kohlenwasserstoffgemisch (enthält 4 % Ca), Borchers AG) |
| 0,22 % | ®Octa Soligen Kobalt 6 (Trockenstoff, Kobalt(2+)salz verzweigter C₆-C₁₉-Fettsäuren im Kohlenwasserstoffgemisch (enthält 6% Co), Borchers AG) |
| 0,87 % | ®Octa Soligen Zirkonium 6 (Trockenstoff, Zirkoniumsalz verzweigter C₆-C₁₉-Fettsäuren im Kohlenwasserstoffgemisch (enthält 6 % Zr), Borchers AG) |
| 1,57 % | Glykolsäure-n-butylester (= Hydroxyessigsäurebutylester) (Verlaufsverbesserer) |

Die Komponenten werden mit einem Schnellrührer zum fertigen Lack vermischt. Verwendet wird eine Teller-Farbenausreibmaschine (Muller), wie in DIN EN ISO 8780-5 (April 1995) beschrieben. Zur Anwendung kommt ein ®ENGELSMANN JEL 25/53 Muller mit einem wirksamen Tellerdurchmesser von 24 cm. Die Drehzahl des unteren Tellers beträgt ca. 75 min⁻¹. Durch Einhängen eines 2,5 kg Belastungsgewichtes auf den Belastungsbügel wird die Kraft zwischen den Tellern auf ca. 0,5 kN eingestellt. Es werden 0,8 g Pigment und 2,00 g Lack in einer Stufe zu 100 Umdrehungen mit 2,5 kg Belastungsgewicht nach dem in DIN EN ISO 8780-5 (April 1995) Abschnitt 8.1 beschriebenen Verfahren dispergiert. Der Muller wird geöffnet und der Lack zügig auf dem unteren Teller außerhalb des Mittelpunktes gesammelt. Anschließend werden weitere 2,00 g Lack zugesetzt und die Teller zusammengeklappt. Nach zwei Stufen zu 50 Umdrehungen ohne Belastungsgewicht ist die Präparation beendet.

Der pigmentierte Lack wird mit einem Filmzieher (Spalthöhe mindestens 150 µm, höchstens 250 µm) auf einem nicht saugfähigen Karton aufgestrichen. Der lackierte Karton (Aufstrich) wird dann mindestens 12 h bei Raumtemperatur getrocknet. Vor der Farbmessung wird der Aufstrich eine Stunde bei ca. 65 °C (± 5°C) getrocknet und abgekühlt.

### Messung der Aufhellung von Eisenoxid-Pigmenten:

Das Pigment und das Aufhellmittel werden mit einem Muller (Teller-Farbenausreibmaschine) in einem lufttrocknenden Lacksystem dispergiert. Als Aufhellmittel wird ein handelsübliches ®Bayertitan R-KB-2 Titandioxid-Pigment (Bayer AG) verwendet. Dieses Pigment entspricht dem Typ R 2 in ISO 591 - 1977. Das Lacksystem (Lack) entspricht demjenigen zur Bestimmung des Purtons (s. oben).

Die Komponenten des Lacksystems werden mit einem Schnellrührer zum fertigen Lack vermischt.

Die Herstellung des pigmentierten Lackes und die des Lackaufstriches erfolgen so, wie bei der Bestimmung des Purtons (s. oben) beschrieben, wobei 0,1500 g zu prüfendes Pigment, 0,7500 g Bayertitan R-KB-2 und 2,00 g Lack eingewogen werden.

### Farbmeßgerät:

Es wird ein Spektrophotometer ("Farbmeßgerät") mit einer Ulbrichtkugel mit der Meßgeometrie d/8 ohne Glanzfalle verwendet. Diese Meßgeometrie ist in ISO 7724/2-1984 (E) Punkt 4.1.1, in DIN 5033 Teil 7 (Juli 1983) Punkt 3.2.4 und in DIN 53 236 (Januar 1983) Punkt 7.1.1 beschrieben. Zur Anwendung kommt ein ®Dataflash 2000 Meßgerät der Firma Datacolor International.

Das Farbmeßgerät wird gegen einen weißen, keramischen Arbeitsstandard kalibriert, wie in ISO 7724/2-1984 (E) Punkt 8.3 beschrieben. Die Reflexionsdaten des Arbeitsstandards gegen einen ideal mattweißen Körper sind im Farbmeßgerät hinterlegt, so daß nach Kalibrierung mit dem weißen Arbeitsstandard alle Farbmessungen auf den ideal mattweißen Körper bezogen werden. Die Schwarzpunktkalibrierung wird mit einem schwarzen Hohlkörper des Farbmeßgeräteherstellers ausgeführt.

### Farbmessung:

Eine möglicherweise vorhandene Glanzfalle ist ausgeschaltet. Die Temperatur von Farbmeßgerät und Prüfling beträgt ca. 25 °C ± 5 °C.

Der Lackaufstrich wird so an das Farbmeßgerät gelegt, daß die Meßöffnung eine mittlere Stelle der Lackschicht abdeckt. Der Aufstrich muß vollständig und plan anliegen. Die Meßöffnung muß vollständig von der Lackschicht bedeckt sein. Anschließend erfolgt die Messung.

### Berechnung der CIE-Koordinaten:

Aus dem gemessenen Reflexionsspektrum werden nach den Berechnungsanweisungen in ASTM E 308 - 1985, Punkt 7 die CIE-Koordinaten L*, a* und b* von 1976 berechnet. Zur Verwendung kommen die Gewichtungsfunktionen der Normlichtart C und des 2°-Normalbeobachters von 1931 in ASTM E 308 - 1985, Table 5.6. Der Wellenlängenbereich liegt zwischen 400 nm und 700 nm. Das Wellenlängenintervall beträgt 20 nm. Es wird rechnerisch kein Glanz abgezogen. Die erhaltenen Remissionswerte werden nach DIN 5033, Teil 3 (Juli 1992) in das CIELAB-Farbdatensystem umgerechnet.

Die relative Farbstärke wird in Analogie zum relativen Streuvermögen nach DIN 53 165 (Punkt 3.4) mit Bayertitan R-KB-2 als Aufhellmittel und einem geeigneten Bayferrox-Referenz-Pigment (anstelle des Farbrußes) errechnet; als ρ_{∞} wird der Normfarbwert Y/100 verwendet.

Nachfolgend wird die Erfindung beispielhaft beschrieben, ohne daß darin eine Einschränkung zu sehen ist. Die in den Beispielen angeführten Teile und Prozente beziehen sich auf das Gewicht, soweit nicht anders vermerkt.

### Beispiel 1

### Herstellung der Eisensulfat-haltigen Lösung zur Fällung von Eisenoxid-Pigmentfällung

In 250 g Dünnsäure (Zusammensetzung siehe unten) mit einem Mangan-Gehalt von 2,05 % Mn, bezogen auf Fe, werden bei 80°C innerhalb von 170 min 46,6 g Gußeisenspäne (Zusammensetzung siehe unten) gegeben. Der pH-Wert der Lösung steigt dabei auf 3,6. Anschließend wird CaO bis zu einem pH-Wert von 4,5 zugegeben. Nach Verdünnen mit 350 g Wasser und Abtrennung des Niederschlags durch Filtration werden 549 g klare, grüne Lösung mit einem FeSO₄-Gehalt von 17,6 % und einem Mangan-Gehalt von 0,48 % Mn bezogen auf Fe erhalten. Der Fe-Gehalt der Lösung beträgt 6,46 %. Daneben werden 37,7 g Filterkuchen (trocken) erhalten. Die Lösung wird bis zur weiteren Verarbeitung mit etwas Schwefelsäure auf einen pH-Wert von 2 gestellt, um eine Oxidation des Fe(II) zu vermeiden.

| | Dünnsäure | Gußeisenspäne | FeSO₄-Lösung |
|---|---|---|---|
| pH | < 0 | --- | 4,4 |
| H₂SO₄ | 24,2 % | --- | --- |
| Fe | 2,98% | 91,1% | 6,46% |
| Ti | 0,38% | | <0,001 % |
| Al | 0,31% | 0,28% | 0,002% |
| Cr | 0,030% | 0,006 % | <0,001 % |
| Mn | 0,061% | 0,09% | 0,031% |
| Mg | 0,64% | 0,22% | 0,245% |
| Mn/Fe | 0,0205 | 0,00099 | 0,0048 |

### Beispiel 2

### Herstellung der Eisensulfat-haltigen Lösung zur Fällung von Eisenoxid-Pigment

In 250 g Dünnsäure (Zusammensetzung wie Beispiel 1) mit einem Mangan-Gehalt von 2,05 % Mn, bezogen auf Fe werden bei 80°C innerhalb von 170 min 80 g Gußeisenspäne (Zusammensetzung siehe Beispiel 1) gegeben. Der pH-Wert der Lösung steigt dabei auf 4,4. Nach Verdünnen mit Wasser und Abtrennen des Niederschlags durch Zentrifugieren wird eine klare, grüne grüne FeSO₄-Lösung mit einem Mangan-Gehalt von 0,49 % Mn, bezogen auf Fe, erhalten.

### Beispiel 3

### Herstellung der Eisensulfat-haltigen Lösung zur Fällung von Eisenoxid-Pigment

250 g Dünnsäure (Zusammensetzung wie Beispiel 1) mit einem Mangan-Gehalt von 2,05 % Mn, bezogen auf Fe, wird bei 80°C innerhalb von von 4 h mit 50 g Walzzunder mit einem Mangan-Gehalt von 1,9 % Mn umgesetzt. Der pH-Wert der Lösung steigt dabei auf 1,1. Anschließend werden Gußeisenspäne (Zusammensetzung wie Beispiel 1) bis zu einem pH-Wert der Lösung von 4,4. Nach Verdünnen mit Wasser und Abtrennen des Niederschlags durch Filtration wird eine klare, grüne FeSO₄-Lösung erhalten.

### Beispiel 4

### Herstellung von Eisenoxidschwarz (Magnetit)

2,864 kg der nach Beispiel 1 erhaltenen Eisensulfat-Lösung (während der Zwischenlagerung mit Schwefelsäure auf pH <2 gestellt, um Oxidation zu verhindern) wird mit 2,673 kg Wasser verdünnt, in einem Rührbehälter mit Rührer und Begasungseinrichtung vorgelegt und auf 85°C erwärmt. Danach werden 0,66 kg einer 25 %igen Natronlauge (318 g NaOH/l) zugegeben, um den pH-Wert der Reaktionsmischung auf 7,0 einzustellen. Anschließend wird mit 0,1 m³/h Luft begast, bis es zu einem Potentialsprung in der Lösung von ca. -700 mV auf ca. -200 mV kommt (nach ca. 4,5 h); der pH-Wert wandert während der Begasung auf einen Wert von ca. 4,5. Der ausgefällte Magnetit wird über Nutschen abfiltriert und mit 0,50 kg Wasser gewaschen. Es werden 5,479 kg Filtrat, 0,52 kg Waschfiltrat und 0,302 kg Filterkuchen mit 64,9 % Feststoffgehalt (60°C bis zur Gewichtskonstanz) erhalten. Nach Trocknung des Filterkuchens im Umlufttrockenschrank bei 60°C und Desagglomeration mit einer Schlagkreuzmühle werden 0,196 kg Magnetit mit folgenden Eigenschaften erhalten:

| | |
|---|---|
| Ca | 0,002 % |
| SO₄ | 2,41 % |
| Fe | 68,8 % |
| Ti | 0,002 % |
| Mg | 0,005 % |
| Mn | 0,039 % |
| Cr | <0,001 % |
| V | 0,001 % |
| Al | 0,021 % |
| Na | 0,054 % |
| Mn/Fe | 0,00057 |

| | |
|---|---|
| BET | 7,4 m²/g |

| | | |
|---|---|---|
| Purton | L* = 12,4 | |
| | a* = 0,8 | |
| | b* = -0,4 | |
| | ΔL* = -0,3 | (gegen Bayferrox 330) |
| | Δa* = -0,1 | (gegen Bayferrox 330) |
| | Δb* = -1.3 | (gegen Bayferrox 330) |

| | | |
|---|---|---|
| Aufhellung | L* = 54,8 | |
| | a* = 0,5 | |
| | b* = -3,8 | |
| | ΔL* = -1,9 | (gegen Bayferrox 330) |
| | Δa* = -0,1 | (gegen Bayferrox 330) |
| | Δb* = -0,5 | (gegen Bayferrox 330) |

Die relative Farbstärke gegen Bayferrox 330 beträgt 118 %.

### Beispiel 5

### Herstellung von Eisenoxidgelb (α-FeOOH)

3,697 kg der nach Beispiel 1 erhaltenen Eisensulfat-Lösung (während der Zwischenlagerung mit Schwefelsäure auf pH <2 gestellt, um Oxidation zu verhindern) und 1,431 betriebsübliche α-FeOOH-Keime mit 32,5 g/l FeOOH (Ullmann's Encyclopedia of Industrial Chemistry, 5th ed., Vol. A 20, p. 297 ff) werden in einem Rührbehälter mit Rührer und Begasungseinrichtung vorgelegt und auf 85°C erwärmt. Danach wird die Lösung mit Natronlauge (318 g NaOH/l) innerhalb von 3 h kontinuierlich auf einen pH-Wert von 3,8 eingestellt, während gleichzeitig mit 33 l/h Luft begast wird. Danach wird weitere 5 h begast, während der pH-Wert durch Zugabe von NaOH auf 3,8 gehalten wird.

Das ausgefällte Eisenoxidgelb-Pigment wird über Nutschen abfiltriert und mit Wasser gewaschen bis die Leitfähigkeit des Filtrats <50 µS beträgt.

Es werden 4,254 kg Filtrat, 2,407 kg Waschfiltrat und 1,684 kg Filterkuchen mit 42,0 % Feststoffgehalt (60°C bis zur Gewichtskonstanz) erhalten. Nach Trocknung des Filterkuchens im Umlufttrockenschrank bei 60°C und Desagglomeration mit einer Schlagkreuzmühle werden 0,707 kg Eisenoxidgelb-Pigment mit folgenden Eigenschaften erhalten:

| | |
|---|---|
| Ca | 0,001 % |
| SO₄ | 1,2 % |
| Fe | 61,3 % |
| Ti | 0,001 % |
| Mg | 0,003 % |
| Mn | 0,026 % |
| Cr | <0,001 % |
| V | <0,001 % |
| Al | 0,013 % |
| Na | 0,012 % |
| Mn/Fe | 0,0004 |

| | |
|---|---|
| BET | 22,4 m²/g |

| | | |
|---|---|---|
| Purton | L* = 62,7 | |
| | a* = 7,8 | |
| | b* = 45,6 | |
| | ΔL* = 0,9 | (gegen Bayferrox 1410 M) |
| | Δa* = -2,5 | (gegen Bayferrox 1410 M) |
| | Δb* = -1,4 | (gegen Bayferrox 1410 M) |

| | | |
|---|---|---|
| Aufhellung | L* = 82,5 | |
| | a* = 3,6 | |
| | b* = 38,2 | |
| | ΔL* = 0,4 | (gegen Bayferrox 1410 M) |
| | Δa* = -1,2 | (gegen Bayferrox 1410 M) |
| | Δb* = 0,0 | (gegen Bayferrox 1410 M) |

Die relative Farbstärke gegen Bayferrox 1410 M beträgt 95%.

### Beispiel 6

### Calcination des Eisenoxidschwarz

20 g des gemäß Beispiel 4 erhaltenen Magnetits werden zu einem Eisenoxidrot-Pigment verglüht, indem der in einer Keramikschale befindliche Magnetit in einem Kammerofen in einem Luftstrom von 600 l/h mit einer Aufheizrate von 4°C/min aufgeheizt und bei 600°C aus dem Ofen herausgenommen wird.

Nach einer Mahlung von 60 s im Dismembrator wird ein Eisenoxidrot-Pigment mit folgenden Eigenschaften erhalten:

| | | |
|---|---|---|
| Purton | L* = 33,8 | |
| | a* = 20,9 | |
| | b* = 11,8 | |
| | ΔL* = 2,0 | (gegen Bayferrox 180 M) |
| | Δa* = 2,4 | (gegen Bayferrox 180 M) |
| | Δb* = 3,4 | (gegen Bayferrox 180 M) |

| | | |
|---|---|---|
| Aufhellung | L* = 63,7 | |
| | a* = 15,7 | |
| | b* = 3,8 | |
| | ΔL* = -2,7 | (gegen Bayferrox 180 M) |
| | Δa* = 3,7 | (gegen Bayferrox 180 M) |
| | Δb* = 3,6 | (gegen Bayferrox 180 M) |

Die relative Farbstärke gegen Bayferrox 180 M beträgt 129%.

### Beispiel 7

### Calcination des Eisenoxidgelb

20 g des gemäß Beispiel 5 erhaltenen Eisenoxidgelb werden zu einem Eisenoxidrot-Pigment verglüht, indem das in einer Keramikschale befindliche Eisenoxidgelb in einem Kammerofen in einem Luftstrom von 600 l/h mit einer Aufheizrate von 4°C/min aufgeheizt und bei 600°C aus dem Ofen herausgenommen wird.

Nach einer Mahlung von 60 s im Dismembrator wird ein Eisenoxidrot-Pigment mit folgenden Eigenschaften erhalten:

| | | |
|---|---|---|
| Purton | L* = 41,7 | |
| | a* = 26,2 | |
| | b* = 22,1 | |
| | ΔL* = 1,7 | (gegen Bayferrox 110 M) |
| | Δa* = -1,6 | (gegen Bayferrox 110 M) |
| | Δb* = -0,6 | (gegen Bayferrox 110 M) |

| | | |
|---|---|---|
| Aufhellung | L* = 59,9 | |
| | a* = 27,0 | |
| | b* = 22,4 | |
| | ΔL* = -1,1 | (gegen Bayferrox 110 M) |
| | Δa* = 0,6 | (gegen Bayferrox 110 M) |
| | Δb* = 3,0 | (gegen Bayferrox 110 M) |

Die relative Farbstärke gegen Bayferrox 110 M beträgt 111 %.

### Beispiel 8 (Vergleichsbeispiel):

20 kg Dünnsäure werden bei 70 bis 80°C gleichzeitig mit 5,00 kg NH₃ in einen Rührbehälter eingeleitet und bei einem konstanten pH-Wert von 5,0 neutralisiert. Dabei werden 0,38 kg eines Metallhydroxid-haltigen Niederschlags erhalten, welcher durch Filtration abgetrennt wird. Die verbleibende Lösung (54 kg) enthält ca. 36% (NH₄)₂SO₄, 4,2 % FeSO₄, 0,08 % MnSO₄, 3,3 % MgSO₄ und ca. 56 % Wasser.

Diese Lösung wird in einer zweiten Stufe mit ca. 2 m³ Luft oxidiert und während der Oxidation durch weitere Zugabe von 0,51 kg NH₃ auf einem pH-Wert von 7,0 gehalten. Dabei werden nach Filtration 1,14 kg Feststoff (Magnetit) sowie 53,5 kg Ammoniumsulfatlösung mit etwa 40,0 % (NH₄)₂SO₄ erhalten.

Die Charakterisierung nach der im Text beschriebenen Methode ergibt:

| | | |
|---|---|---|
| Aufhellung | L* = 64,5 | |
| | a* = 0,0 | |
| | b* = -0,4 | |
| | | |
| | ΔL* = 1,6 | (gegen Bayferrox 306) |
| | Δa* = -0,1 | (gegen Bayferrox 306) |
| | Δb* = 0,4 | (gegen Bayferrox 306) |

Bayferrox 306 ist das am wenigsten farbstarke Schwarzpigment. Da der aus der hochkonzentrierten Ammoniumsulfatlösung erhaltene Magnetit eine noch höhere Aufhellung bzw. noch weniger Farbstärke aufweist, ist er als Pigment nicht geeignet.

### Beispiel 9

### Calcination des Eisenoxidschwarz (Vergleichsbeispiel)

20 g des gemäß Beispiel 8 erhaltenen Magnetits werden in eine Keramikschale gegeben und in einem Kammerofen in einem Luftstrom von 600 l/h mit einer Aufheizrate von 4°C/min aufgeheizt und bei 600°C aus dem Ofen herausgenommen.

Nach einer Mahlung von 60 s im Dismembrator wird ein Produkt mit folgenden Eigenschaften erhalten:

| | | |
|---|---|---|
| Purton | L* = 28,8 | |
| | a* = 5,4 | |
| | b* = 3,8 | |
| | ΔL* = -3,1 | (gegen Bayferrox 180 M) |
| | Δa* = -13,1 | (gegen Bayferrox 180 M) |
| | Δb* = -4,6 | (gegen Bayferrox 180 M) |

| | | |
|---|---|---|
| Aufhellung | L* = 81,6 | |
| | a* = 3,7 | |
| | b* = 2,3 | |
| | ΔL* = 15,1 | (gegen Bayferrox 180 M) |
| | Δa* = -8,3 | (gegen Bayferrox 180 M) |
| | Δb* = 2,0 | (gegen Bayferrox 180 M) |

Die relative Farbstärke gegen Bayferrox 180 M beträgt lediglich 18%.

Aus der Eisensulfat-Lösung aus Beispiel 9 läßt sich kein Eisenoxidrot-Pigment herstellen. Die Farbe des erhaltenen Produkts ist braun. Eine Verwendung als BraunPigment scheidet wegen der geringen Farbstärke ebenfalls aus.

## Patentansprüche

1. Verfahren zur Herstellung von Eisenoxidschwarz-Pigmenten aus der bei der Herstellung von Titandioxid nach dem Sulfatverfahren anfallenden Dünnsäure, **dadurch gekennzeichnet, daß** in einer ersten Stufe eine teilweise Neutralisation der in der Dünnsäure enthaltenen Schwefelsäure mit Verbindungen aus der Gruppe metallisches Eisen und/oder Eisenverbindungen erfolgt, aus dem so erhaltenen Reaktionsprodukt der Ti-, Al-, Cr- und V-Verbindungen enthaltende Niederschlag abgetrennt wird und aus der so erhaltenen Eisen(II)sulfat-haltigen Lösung unter Zusatz alkalischer Verbindungen sowie eines Oxidationsmittels ein Eisenoxidschwarz-Pigment ausgefällt wird.

2. Verfahren nach Anspruch 1, **dadurch gekennzeichnet, daß** die Neutralisation der Dünnsäure mit metallischem Eisen oder Eisenverbindungen auf einen pH-Wert von 0,5 bis 4,7, vorzugsweise von 2,5 bis 4,7 vorgenommen wird.

3. Verfahren nach Anspruch 1, **dadurch gekennzeichnet, daß** nach der Neutralisation der Dünnsäure mit metallischem Eisen oder Eisenverbindungen mit einer weiteren alkalischen Verbindung weiter neutralisiert wird.

4. Verfahren nach Anspruch 1, **dadurch gekennzeichnet, daß** die Neutralisation der Dünnsäure in der ersten Stufe mit zwei oder mehreren Eisen-Materialien unterschiedlicher Reaktivität nacheinander vorgenommen wird.

5. Verfahren nach Anspruch 1, **dadurch gekennzeichnet, daß** die Neutralisation der Dünnsäure in der ersten Stufe zunächst mit einem reaktionsträgeren Eisen-Material auf einen pH-Wert von 0,5 bis 3,5 und anschließend mit einem reaktionsfreudigeren Eisen-Material auf einen pH-Wert von 2,5 bis 4,7 vorgenommen wird.

6. Verfahren nach Anspruch 1, **dadurch gekennzeichnet, daß** als reaktionsträgeres Eisen-Material Walzzunder und als reaktionsfreudigeres Eisen-Material Gußeisenspäne verwendet werden.

7. Verfahren nach Anspruch 1, **dadurch gekennzeichnet, daß** das zur teilweisen Neutralisation der Dünnsäure in der ersten Stufe eingesetzte metallische Eisen und die basischen Eisenverbindungen einen Mangan-Gehalt von <0,8 % Mn, bezogen auf Fe, vorzugsweise einen Mangan-Gehalt von <0,4 % Mn, bezogen auf Fe, enthalten.

8. Verfahren nach Anspruch 1, **dadurch gekennzeichnet, daß** nach Zugabe des metallischen Eisens oder der Eisenverbindungen die weitere Neutralisation der Lösung mit alkalischen Verbindungen auf einen pH-Wert von 3,0 bis 5,0, bevorzugt auf einen pH-Wert von 3,8 bis 4,8, vorgenommen wird.

9. Verfahren nach Anspruch 1, **dadurch gekennzeichnet, daß** als weiteres Neutralisationsmittel in der ersten Stufe alkalische Verbindungen verwendet werden, die schwerlösliche Sulfate bilden.

10. Verfahren nach Anspruch 1, **dadurch gekennzeichnet, daß** als weiteres Neutralisationsmittel in der ersten Stufe Kraftwerksasche, Müllverbrennungsasche oder eine andere alkalisch reagierende Asche verwendet wird.

11. Verfahren nach Anspruch 1, **dadurch gekennzeichnet, daß** durch Abtrennung der Ti-, Al-, Cr- und V-haltigen Feststoffe und gegebenenfalls durch Eindampfen oder Verdünnen eine Eisen(II)sulfat-haltige Lösung hergestellt wird, die zwischen 150 und 250 g FeSO₄ pro Liter enthält.

12. Verfahren nach Anspruch 1, **dadurch gekennzeichnet, daß** die Eisen(II)sulfat-haltige Lösung unter Zusatz alkalischer Verbindungen, die keine schwerlöslichen Sulfate bilden, und eines Oxidationsmittels zu einem Eisenoxidschwarz-Pigment umgesetzt wird.

13. Verfahren nach Anspruch 1, **dadurch gekennzeichnet, daß** die Eisen(II)sulfat-haltige Lösung unter Zusatz alkalischer Verbindungen, die keine schwerlöslichen Sulfate bilden, und eines Oxidationsmittels zu einem Eisenoxidgelb-Pigment umgesetzt wird.

14. Verfahren nach Anspruch 1, **dadurch gekennzeichnet, daß** für die Fällung des Eisenoxidschwarz-Pigments gasförmiges oder in Wasser gelöstes NH₃, NaOH, KOH, MgO oder Mg(OH)₂ verwendet wird.

15. Verfahren nach Anspruch 1, **dadurch gekennzeichnet, daß** als Oxidationsmittel Sauerstoff oder ein Sauerstoff-haltiges Gasgemisch, vorzugsweise Luft, verwendet werden.

16. Verfahren nach Anspruch 1, **dadurch gekennzeichnet, daß** ein Eisenoxidschwarz-Pigment mit einem Mangan-Gehalt von ≤0,11 %, vorzugsweise ≤0,06 %, bezogen auf Fe, hergestellt wird.

17. Verfahren nach Anspruch 1, **dadurch gekennzeichnet, daß** das ausgefällte Eisenoxidschwarz-Pigment nach Abtrennung, Reinigung und Trocknung zu einem Eisenoxidrot-Pigment verglüht wird.

## Claims

1. Process for the preparation of iron oxide black pigments from the waste acid resulting from the production of titanium dioxide by the sulfate process, **characterised in that** in a first stage a partial neutralisation of the sulfuric acid contained in the waste acid is performed with compounds from the group comprising metallic iron and/or iron compounds, the precipitate containing Ti, Al, Cr and V compounds is separated from the resultant reaction product, and an iron oxide black pigment is precipitated from the resultant iron(II) sulfate-containing solution by addition of alkaline compounds as well as an oxidizing agent.

2. Process according to claim 1, **characterised in that** the neutralisation of the waste acid with metallic iron or iron compounds is carried out at a pH of 0.5 to 4.7, preferably 2.5 to 4.7.

3. Process according to claim 1, **characterised in that** after the neutralisation of the waste acid with metallic iron or iron comopunds, further neutralisation is performed with a further alkaline compound.

4. Process according to claim 1, **characterised in that** the neutralisation of the waste acid in the first stage is carried out successively with two or more iron-containing materials of different reactivity.

5. Process according to claim 1, **characterised in that** the neutralisation of the waste acid in the first stage is carried out first of all with a less reactive iron-containing material at a pH of 0.5 to 3.5 and then with a more reactive iron-containing material at a pH of 2.5 to 4.7.

6. Process according to claim 1, **characterised in that** mill scale is used as the less reactive iron-containing material and cast iron turnings are used as the more reactive iron-containing material.

7. Process according to claim 1, **characterised in that** the metallic iron used for the partial neutralisation of the waste acid in the first stage and the basic iron compounds have a manganese content of <0.8% Mn, referred to Fe, preferably a manganese content of <0.4% Mn, referred to Fe.

8. Process according to claim 1, **characterised in that** after the addition of the metallic iron or iron compounds the further neutralisation of the solution is carried out with alkaline compounds at a pH of 3.0 to 5.0, preferably at a pH of 3.8 to 4.8.

9. Process according to claim 1, **characterised in that** as further neutralising agent in the first stage alkaline compounds are used that form sparingly soluble sulfates.

10. Process according to claim 1, **characterised in that** as further neutralising agent in the first stage power station ash, refuse incineration ash or another alkaline reacting ash is used.

11. Process according to claim 1, **characterised in that** by separating the Ti-, Al-, Cr- and V-containing solids and optionally by evaporation or dilution, an iron(II) sulfate-containing solution is obtained that contains between 150 and 250 g of FeSO₄ per litre.

12. Process according to claim 1, **characterised in that** the iron(II) sulfate-containing solution is converted to an iron oxide black pigment by addition of alkaline compounds that do not form sparingly soluble sulfates and addition of an oxidizing agent.

13. Process according to claim 1, **characterised in that** the iron(II) sulfate-containing solution is converted to an iron oxide yellow pigment by addition of alkaline compounds that do not form sparingly soluble sulfates and addition of an oxidizing agent.

14. Process according to claim 1, **characterised in that** gaseous NH₃ or NH₃ dissolved in water or NaOH, KOH, MgO or Mg(OH)₂ is used for the precipitation of the iron oxide black pigment.

15. Process according to claim 1, **characterised in that** oxygen or an oxygen-containing gaseous mixture, preferably air, is used as oxidizing agent.

16. Process according to claim 1, **characterised in that** an iron oxide black pigment with a manganese content of ≤ 0.11%, preferably ≤0.06%, referred to Fe, is produced.

17. Process according to claim 1, **characterised in that** the precipitated iron oxide black pigment is baked to an iron oxide red pigment after separation, purification and drying.

## Revendications

1. Procédé pour la préparation d'oxydes de fer pigmentaires noirs à partir de l'acide dilué résiduaire de la préparation du dioxyde de titane par le procédé au sulfate **caractérisé en ce que**, dans un premier stade, on procède à une neutralisation partielle de l'acide sulfurique contenu dans l'acide dilué à l'aide de fer métallique et/ou de dérivés du fer, à partir du produit de réaction ainsi obtenu, on sépare le précipité contenant des dérivés du Ti, de l'Al, du Cr et du V, et à partir de la solution obtenue, contenant le sulfate de fer-II, on précipite, par addition de dérivés alcalins et d'un agent oxydant, un oxyde de fer pigmentaire noir.

2. Procédé selon la revendication 1, **caractérisé en ce que** la neutralisation de l'acide dilué par le fer métallique ou des dérivés du fer est réalisée à un pH de 0,5 à 4,7, de préférence de 2,5 à 4,7.

3. Procédé selon la revendication 1, **caractérisé en ce que**, après neutralisation de l'acide dilué par du fer métallique ou des dérivés du fer, on poursuit la neutralisation à l'aide d'un dérivé alcalin.

4. Procédé selon la revendication 1, **caractérisé en ce que** la neutralisation de l'acide dilué au premier stade est réalisée successivement à l'aide de deux ou plusieurs matières ferreuses à réactivités différentes.

5. Procédé selon la revendication 1, **caractérisé en ce que** la neutralisation de l'acide dilué au premier stade est réalisée d'abord avec une matière ferreuse peu réactive jusqu'à un pH de 0,5 à 3,5 puis avec une matière ferreuse réactive jusqu'à un pH de 2,5 à 4,7.

6. Procédé selon la revendication 1, **caractérisé en ce que** l'on utilise en tant que matière ferreuse peu réactive des paillettes de laminage et en tant que matière réactive des copeaux de fonte.

7. Procédé selon la revendication 1, **caractérisé en ce que**, pour la neutralisation partielle de l'acide dilué au premier stade, le fer métallique et les dérivés basiques du fer mis en oeuvre ont une teneur en manganèse < 0,8 % de Mn par rapport au Fe, et de préférence une teneur en manganèse < 0,4 % de Mn par rapport au Fe.

8. Procédé selon la revendication 1, **caractérisé en ce que**, après addition du fer métallique ou des dérivés du fer, on poursuit la neutralisation de la solution à l'aide de dérivés alcalins jusqu'à un pH de 3,0 à 5,0, de préférence jusqu'à un pH de 3,8 à 4,8.

9. Procédé selon la revendication 1, **caractérisé en ce que** pour la poursuite de la neutralisation au premier stade, on utilise des dérivés alcalins formant des sulfates peu solubles.

10. Procédé selon la revendication 1, **caractérisé en ce que**, pour la poursuite de la neutralisation au premier stade, on utilise en tant qu'agents neutralisés des cendres de génératrice, de cendres de combustion d'ordures ou d'autres cendres à réaction alcaline.

11. Procédé selon la revendication 1, **caractérisé en ce que**, par séparation des matières solides contenant Ti, Al, Cr et V et le cas échéant par évaporation ou dilution, on prépare une solution contenant du sulfate de fer-II à des concentrations de 150 à 250 g de FeSO₄ par litre.

12. Procédé selon la revendication 1, **caractérisé en ce que** la solution contenant le sulfate de fer-II est convertie en oxyde de fer pigmentaire noir par addition de dérivés alcalins qui ne forment pas de sulfates insolubles et d'un agent oxydant.

13. Procédé selon la revendication 1, **caractérisé en ce que** la solution contenant le sulfate de fer-II est convertie en oxyde de fer jaune pigmentaire par addition de dérivés alcalins ne formant pas de sulfates insolubles et d'un agent oxydant.

14. Procédé selon la revendication 1, **caractérisé en ce que**, pour la précipitation de l'oxyde de fer pigmentaire noir, on utilise NH₃ gazeux ou en solution aqueuse, NaOH, KOH, MgO ou Mg(OH)₂.

15. Procédé selon la revendication 1, **caractérisé en ce que** l'on utilise en tant qu'agent oxydant l'oxygène ou un mélange gazeux contenant de l'oxygène, de préférence l'air.

16. Procédé selon la revendication 1, **caractérisé en ce que** l'on prépare un oxyde de fer pigmentaire noir à une teneur en manganèse ≤ 0,11 %, de préférence ≤ 0,06 % par rapport au Fe.

17. Procédé selon la revendication 1, **caractérisé en ce que** l'oxyde de fer pigmentaire noir précipité est calciné en oxyde de fer pigmentaire rouge après séparation, purification et séchage.
